# EUROPÄISCHE PATENTANMELDUNG

(11) **EP 3 995 307 A1**
(43) Veröffentlichungstag der Anmeldung: **11.05.2022**
(21) Anmeldenummer: 21201369.2
(22) Anmeldetag: 07.10.2021
(51) Int. Cl.: B32B 7/12, B32B 27/08, B32B 27/20, B32B 27/32, B32B 27/40, B32B 27/30, B32B 27/34

(54) **POLYETHYLENFILM**

(30) Priorität: 05.11.2020 AT 509532020
(71) Anmelder: Constantia Pirk GmbH & Co. KG, 92712 Pirk (DE)
(72) Erfinder: Geillersdörfer, Ingo, 92708 Mantel (DE); Dewald, Inna, 92637 Weiden (DE); Lamtigui, Thami, 80992 München (DE)
(74) Vertreter: Patentanwälte Pinter & Weiss OG

(57) **Zusammenfassung**

Ein flexibel verarbeitbar und gut recyclierbarer Polyethylenfilm umfasst eine zentrale Filmschicht (2) bestehend aus 30 Vol% bis 100 Vol% Polyethylen hoher Dichte, die an beiden Seiten jeweils von einer äußeren Filmschicht (3) bestehend aus zumindest einem Polyethylen-Copolymer oder zumindest einem Polyethylen-Terpolymer oder aus zumindest einem Polyethylen-Copolymer und zumindest einem Polyethylen-Terpolymer umgeben ist, wobei zwischen der zentralen Filmschicht (2) und zumindest einer der äußeren Filmschichten (3) eine Polypropylenschicht (4) angeordnet ist.

## Beschreibung

Die gegenständliche Erfindung betrifft ein Polyethylenfilm und ein Polyethylenlaminat, sowie Verfahren zu deren Herstellung.

Kunststofflaminate zur Verwendung in der Verpackungsindustrie müssen in Abhängigkeit von der jeweiligen Anwendung eine breite Palette an Eigenschaften aufweisen, wie Barriereeigenschaften, Siegeleigenschaften, Reißeigenschaften, mechanische Eigenschaften, optische Eigenschaften, Festigkeitseigenschaften usw. Solche Kunststofflaminate sind in der Regel mehrschichtig aufgebaut mit verschiedenen Schichten und sind mit einem Extrusionsprozess, Coextrusionsprozess oder Kaschierprozess, auch Mischungen davon, hergestellt. Um die Recylierbarkeit des Kunststofflaminats zu verbessern, oder überhaupt erst zu ermöglichen, werden oftmals reinsortige Laminate angestrebt, also Kunststofflaminate, die im Wesentlichen nur aus einer einzigen Kunststofftype, wie beispielsweise Polyethylen oder Polypropylen, bestehen. Dabei können verschiedene Homopolymere der gewünschten Kunststofftype verwendet werden, aber auch Copolymere. Um die Recylierbarkeit nicht zu beeinträchtigen sind Copolymere üblicherweise nur in geringem Ausmaß zulässig und die verwendeten Copolymere müssen hinsichtlich der Recylierbarkeit mit der verwendeten Kunststofftype, beispielsweise Polyethylen, kompatibel sein. Hinsichtlich der Recylierbarkeit ist Polyethylen vorteilhaft, weil es dafür in den meisten Ländern einen Recyclingprozess gibt. Beispielsweise beschreibt die WO 2019/243456 A1 ein recycelfreundliches Verpackungslaminat auf Polyethylenbasis. Ein anderes Beispiel hierfür, ebenfalls auf Polyethylenbasis, findet sich in der EP 3 390 049 B1.

Ein Kunststofflaminat zur Verwendung in der Verpackungsindustrie weist in der Regel auch eine Siegelschicht auf, um aus dem Kunststofflaminat durch Thermosiegeln eine Verpackung, wie beispielsweise Beutel oder Säcke, zu formen. Beim Thermosiegeln werden Siegelschichten unter Temperatureinwirkung aneinander gepresst, sodass die Siegelschichten aufschmelzen und sich verbinden, sodass nach dem Siegelprozess und dem Verfestigen der Siegelschichten eine Verbindung entsteht. Beim Herstellen der Verpackung müssen daher die Siegelschichten einander zugewandt sein.

Beim Siegeln kann in Abhängigkeit von der Art der Verpackung und der Siegelnaht die Innenseite des Kunststofflaminats gegen die Innenseite des Kunststofflaminats anliegen (z.B. bei einer sogenannten Umlegenaht (Fin Seal)) oder die Innenseite des Kunststofflaminats gegen die Außenseite des Kunststofflaminats (z.B. bei einer sogenannten Überlappungsnaht (Lap Seal)). In letzteren Fall muss das Kunststofflaminat daher an beiden Außenseiten siegelfähig sein, wobei die Siegelschichten hinsichtlich der Siegelbarkeit auch kompatibel sein müssen, um eine gute Verbindung herstellen zu können.

Ein Kunststofflaminat mit einer Siegelschicht an nur einer Seite, wie z.B. in der WO 2019/243456 A1 oder der EP 3 390 049 B1, ist daher nur eingeschränkt durch Thermosiegeln zu einer Verpackung verarbeitbar.

Es ist daher eine Aufgabe der gegenständlichen Erfindung, einen Polyethylenfilm, und ein damit hergestelltes Polyethylenlaminat, anzugeben, dass flexibel verarbeitbar und gut recyclierbar ist.

Diese Aufgabe wird mit einem Polyethylenfilm gelöst, der eine zentrale Filmschicht bestehend aus 30 Vol% bis 100 Vol% Polyethylen hoher Dichte aufweist, die an beiden Seiten jeweils von einer äußeren Filmschicht bestehend aus zumindest einem Polyethylen-Copolymer oder zumindest einem Polyethylen-Terpolymer oder aus zumindest einem Polyethylen-Copolymer und zumindest einem Polyethylen-Terpolymer umgeben ist, wobei zwischen der zentralen Filmschicht und zumindest einer der äußeren Filmschichten eine Polypropylenschicht angeordnet ist.

Das Polyethylen-Copolymer oder das Polyethylen-Terpolymer ist einerseits gut als Siegelschicht geeignet, auch in Form einer Mischung. Nachdem das Copolymer oder Terpolymer auf beiden Seiten vorgesehen ist, kann der Polyethylenfilm flexibel eingesetzt und zu einer Verpackung weiterverarbeitet werden. Andererseits ist das Polyethylen-Copolymer oder das Polyethylen-Terpolymer nicht zu klebrig, womit dieses auch an einer Außenseite einer mit dem Polyethylenfilm hergestellten Verpackung verwendet werden kann. Nicht zuletzt kann das Polyethylen-Copolymer oder Polyethylen-Terpolymer auch gut bedruckt werden, was besonders bei Verpackungen wichtig ist.

Dadurch, dass zwischen der zentralen Filmschicht und zumindest einer der äußeren Filmschichten eine weitere Filmschicht aus Polypropylen angeordnet ist, kann bei Verwendung des Polyethylenfilms, oder eines Polyethylenlaminats mit einem solchen Polyethylenfilm, ein vorteilhaftes Öffnungsverhalten an der Siegelschicht erreicht werden. Da PE und PP hinsichtlich der Siegelung nicht kompatibel sind, kann an der Siegelstelle ein sogenanntes Risspeel-Verhalten erzielt werden, womit die Verpackung einfach und sicher entlang der Siegelung geöffnet werden kann.

Um die Barrierewerte (OTR und WVTR) zu erhöhen, ist vorteilhaft an einer der äußeren Filmschichten an der Außenseite eine Barrierebeschichtung vorgesehen, die als metallische oder keramische Beschichtung oder als Barrierepolymer ausgeführt sein kann. Dabei sind auch mehrschichtige und auch gemischte Barrierebeschichtungen, wie beispielsweise eine Metallisierung und keramische Beschichtung oder eine Kombination aus einer metallischen oder keramischen Beschichtung mit einem Barrierelack möglich. Das erlaubt eine gute Anpassbarkeit der Barrierewerte an die jeweilige Anwendung.

Vorteilhaft wird aus dem Polyethylenfilm ein Polyethylenlaminat hergestellt, bestehend aus einem ersten solchen Polyethylenfilm der mit einem zweiten solchen Polyethylenfilm verbunden ist. Der zweite Polyethylenfilm kann aber auch ohne die Polypropylenschicht ausgeführt sein.

Ein Polyethylenfilm kann beispielsweise als Umverpackung, also als zusätzliche äußere Verpackung, in der eine abgepackte Ware verpackt ist, eingesetzt werden, weil für eine solche Umverpackung üblicherweise keine oder nur geringe Anforderungen an die Barriereeigenschaften und Festigkeit, insbesondere Steifigkeit, gestellt werden. Ein Polyethylenlaminat wird üblicherweise zu einer Verpackung zum Abpacken einer Ware eingesetzt. Das erfindungsgemäße Polyethylenlaminat hat aufgrund des Schichtaufbaus eine ausreichende Steifigkeit, sodass das Laminat auch zu (Stand)Beuteln und ähnlichen Verpackungen verarbeitet werden kann. Außerdem bietet das Polyethylenlaminat den Vorteil, dass eine übliche Bedruckung und gegebenenfalls auch eine Barrierebeschichtung innenliegend und damit geschützt angeordnet werden kann.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 und 2 jeweils einen erfindungsgemäßen Polyethylenfilm,
Fig.3 ein erfindungsgemäßes Polyethylenlaminat,
Fig.4 eine mit dem Polyethylenlaminat hergestellte Verpackung und
Fig.5 eine mit dem Polyethylenfilm oder Polyethylenlaminat hergestellte Überlappungsnaht.

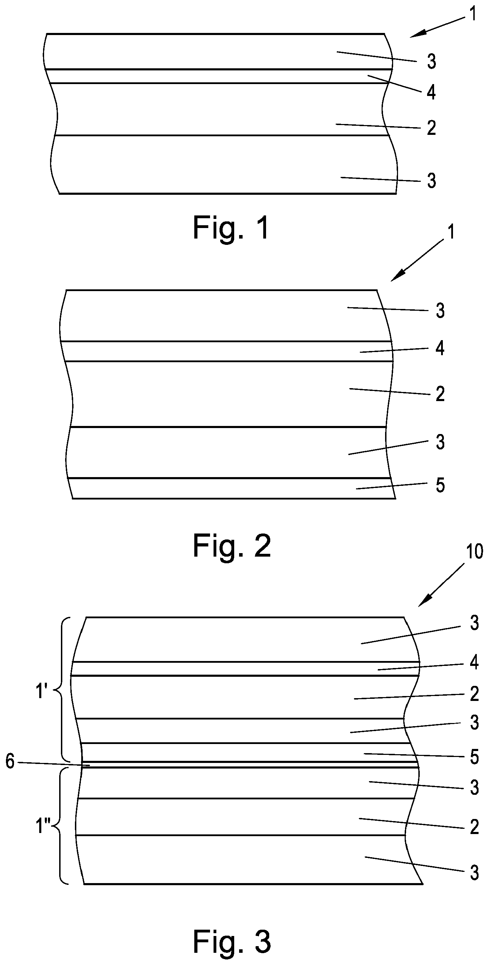

Ein erfindungsgemäßer Polyethylenfilm 1, wie in Fig.1 dargestellt, umfasst eine zentrale Filmschicht 2, die an beiden Seiten jeweils von einer äußeren Filmschicht 3 umgeben ist. Die Dicke des Polyethylenfilms 1 beträgt vorzugsweise 4 bis 50µm.

Die zentrale Filmschicht 2 besteht vorrangig aus Polyethylenen (PE) und damit hinsichtlich der Recycelfreundlichkeit kompatiblen Materialen. Die Filmschicht 2 hat einen Anteil an Polyethylen (PE) hoher Dichte (HDPE), zwischen 30 Vol% bis 100 Vol%. Der allfällige Rest besteht aus einem kompatiblen, die Recycelfähigkeit nicht beeinträchtigenden Polyolefin-Material und gegebenenfalls auch möglichen, optionalen Additiven, wie Gleitmittel, Antiblockadditive, Farbpigmente, Füllstoffe, usw. Der gesamte Anteil des kompatiblen Polyolefin-Materials in der zentralen Filmschicht 2 beträgt zwischen 0 Vol% bis 70 Vol%. Additive werden gegebenenfalls in geringen Mengen zugegeben (0 Vol% bis 5 Vol%) und beeinträchtigen die Recycelfähigkeit des Polyethylenfilms 1 damit nicht.

Als kompatibles Polyolefin-Material kommen grundsätzlich jegliche Arten von Polyethylenen in Frage, insbesondere auch Ethylen-Copolymere, wie beispielsweise Ethylen-Vinylacetat-Copolymer (EVA), Methacrylsäureethylester (EMA), Ethylen/Acrylsäure-Copolymer (EAA) oder Ethylen-Butylacrylat-Copolymer (EBA). Ebenso kann als kompatibles Polyolefin-Material auch Polypropylen (PP) oder ein Cycloolefin-Copolymer (COC) im Ausmaß von 0 Vol% bis 20 Vol% verwendet werden. Im Falle vom PP wird vorzugsweise ein Polypropylen-Random-Copolymer mit Ethylen als Comonomer (üblich 5 bis 15%), ein Polypropylen-Copolymer mit Ethylen oder ein Polypropylen-Homopolymer, das mit linearen PE-Typen, wie mLLDPE, LLDPE oder HDPE ausreichend kompatibel ist, verwendet, um eine zumindest begrenzte Recycelfähigkeit zu erzielen. Für die zentrale Filmschicht 2 können auch verschiedene kompatible Polyolefin-Materialien verwendet werden.

Unter einem HDPE wird ein PE Typ mit einer Dichte zwischen 0,94-0,97 g/cm³ verstanden. Andere mögliche PE-Typen sind beispielsweise ein lineares Polyethylen niedriger Dichte (LLDPE) (mit einer Dichte zwischen 0,87-0,94g/cm³), ein Polyethylen niedriger Dichte (LDPE) (mit einer Dichte zwischen 0,915-0,935 g/cm³) oder auch ein lineares Metallocene Polyethylen niedriger Dichte (mLLDPE).

Das HDPE und das kompatible Polyolefin-Material können dabei in der zentralen Filmschicht 2 als Mischung vorliegen. Die zentrale Filmschicht 2 kann aber auch mehrschichtig (extrudiert oder coextrudiert) aufgebaut sein mit einer (oder auch mehrerer) PE, vorzugsweise HDPE, Schicht und einer (oder auch mehrerer) Schicht aus dem kompatiblen Polyolefin-Material. Das kompatible Polyolefin-Material kann aber auch als Copolymer enthalten sein.

Die Dicke der zentralen Filmschicht 2 beträgt vorzugsweise 1 bis 47µm.

Eine zentrale Filmschicht 2 könnte beispielsweise mit einer zentralen PE-Schicht und zwei daran anschließenden HDPE-Schichten, vorzugsweise eine HDPE-Schicht mit einem niedrigen mLLDPE oder LLDPE Anteil (beispielsweise 5 bis 10 Vol%) oder entsprechenden Schichten aus mLLDPE oder LLDPE (wenn mehrlagig ausgeführt), ausgeführt sein. In einem solchen symmetrischen Aufbau können die beiden äußeren Schichten der zentralen Filmschicht 2 beispielsweise in Form eines x/1/x, insbesondere x = 0.1 - 24, ausgeführt sein.

Die beiden äußeren Filmschichten 3 bestehen aus einem Polyethylen-Copolymer oder Polyethylen-Terpolymer oder einem Polyethylen-Copolymer und einem Polyethylen-Terpolymer. Ein Copolymer ist hierbei ein Polymer, das durch Polymerisation von zwei verschiedenen Monomeren hergestellt wird. Ein Terpolymer ist hierbei ein Polymer, das durch Polymerisation von drei verschiedenen Monomeren hergestellt wird. Im Falle eines Polyethylen-Copolymer oder Polyethylen-Terpolymer wird dieses durch Polymerisation von Ethylen mit einem oder zwei weiteren Comonomeren hergestellt. Als Comonomere werden in einem Polyethylen-Copolymer oder Polyethylen-Terpolymer der äußeren Filmschicht 3 vorzugsweise C₃ - C₁₂ Alpha-Olefine verwendet, wobei in einem Polyethylen-Terpolymer zwei verschiedene Comonomere verwendet werden, also vorzugsweise verschiedene C₃ - C₁₂ Alpha-Olefine. Vorzugsweise werden als Comonomere 1-Buten, 1-Hexen und 1-Octen verwendet, in einem Polyethylen-Terpolymer vorzugsweise 1-Buten und 1-Hexen. Der Gesamtanteil an Comonomeren im Polyethylen-Copolymer oder Polyethylen-Terpolymer liegt zwischen 0,3 und 30 Mol%. Im Falle eines Polyethylen-Terpolymers, das durch Polymerisation von Ethylen, 1-Buten und 1-Hexen hergestellt wird, ist der Anteil an 1-Buten vorzugsweise zwischen 0,1 und 10 Mol% und der Anteil an 1-Hexen vorzugsweise zwischen 0,2 und 10 Mol%. Das resultierende Polyethylen im Polyethylen-Copolymer oder Polyethylen-Terpolymer ist ein LLDPE oder HDPE, vorzugsweise ein LLDPE.

In einer bevorzugten Ausführung ist die äußere Filmschicht 3 ein LLDPE, wobei das LLDPE ein Copolymer von Ethylen und einem C₃ - C₁₂ Alpha-Olefin Comonomer ist, vorzugsweise 1-Buten, 1-Hexen oder 1-Octen, oder ein Terpolymer von Ethylen und zwei verschiedenen C₃ - C₁₂ Alpha-Olefinen als Comonomer, vorzugweise 1-Buten und 1-Hexen.

Es ist aber nicht erforderlich, dass beide äußeren Filmschichten 3 aus dem gleichen Material bestehen. Grundsätzlich können die beiden äußeren Filmschichten 3 auch aus unterschiedlichen Polyethylen-Copolymeren oder unterschiedlichen Polyethylen-Terpolymeren bestehen oder aus unterschiedlichen Mischungen eines Polyethylen-Terpolymers und eines Polyethylen-Copolymers. Ebenso ist es denkbar, dass eine äußere Filmschicht 3 auch aus einer Mischung aus einem (oder auch mehreren) Polyethylen-Copolymer und einem (oder auch mehreren) Polyethylen-Terpolymer oder eine Mischung verschiedener Polyethylen-Terpolymeren ist.

Eine äußere Filmschicht 3 kann einschichtig oder mehrschichtig (extrudiert oder coextrudiert) sein. Im Fall einer mehrschichtigen Ausführung einer äußeren Filmschicht 3 können die einzelnen Schichten aus demselben Polyethylen-Copolymer oder Polyethylen-Terpolymer bestehen, oder auch aus verschiedenen, wobei auch ein Polyethylen-Copolymer (auch verschiedene Polyethylen-Copolymere) und ein Polyethylen-Terpolymer (auch verschiedene Polyethylen-Terpolymere) in einer äußeren Filmschicht 3 vorhanden sein kann.

Die Dicke der äußeren Filmschichten 3 beträgt vorzugsweise 1 bis 25µm, wobei die beiden äußeren Filmschichten 3 auch unterschiedlich dick sein können.

Der Polyethylenfilm 1 kann, wie in der Ausführung der Fig.2, an einer Außenseite eine Barrierebeschichtung 5 aufweisen, um die Barrierewirkung des Polyethylenfilms 1 zu erhöhen, insbesondere die Wasserdampfbarriere und Sauerstoffbarriere. In gewissen Anwendungen ist eine Barrierewirkung der Sauerstoffbarriere (OTR) von kleiner 100 cm³/m²/Tag und eine Wasserdampfbarriere (WVTR) von kleiner 1 g/m²/Tag gefordert (gemessen für Sauerstoff gemäß ISO 15105-2 / DIN 53380-3 und Wasserdampf gemäß ISO15106-2). Für die Barrierewirkung gegen Aroma gibt es keine Norm, sondern wird nach subjektiven Gesichtspunkten bestimmt.

Die Barrierebeschichtung 5 kann aus einem Barrierepolymer, also einem Polymer mit einer ausreichenden Barriereeigenschaft, insbesondere gegen Sauerstoff, Wasserdampf und/oder Aroma, oder aus einer metallischen oder keramischen Beschichtung bestehen.

Als Barrierepolymer wird vorzugsweise Polyvinylalkohol (PVOH) sowie Copolymere daraus, Polyamid (PA), Polyvinylidenchlorid (PVDC), Ethylen-Vinylalkohol-Copolymer (EVOH), ein Polyurethan (PU), Ethylen-Copolymere, Polymere basierend auf Polyacrylsäure oder ein Acrylat verwendet. Die Barrierebeschichtung 5 aus einem Barrierepolymer hat eine Dicke von 5 bis 20%, vorzugsweise 5 bis 10%, der Gesamtdicke des Polyethylenfilms 1. Die Barrierebeschichtung 5 kann auch verschiedene Barrierepolymere umfassen, entweder als Mischung oder in Form eines mehrschichtigen Aufbaus. Das Barrierepolymer kann extrudiert, coextrudiert (Verbindung mittels eines coextrudierten Haftvermittlers) oder kaschiert (Verbindung mittels eines Kaschierklebers) sein, auch mehrschichtig, und kann auch in Form eines Barrierelackes aufgebracht werden. Durch die geringe Dicke der Barrierebeschichtung 5 wird die Recyclingfreundlichkeit des Polyethylenfilms 1 nicht beeinträchtigt.

Eine metallische oder keramische Beschichtung wird vorzugsweise mittels eines geeigneten Beschichtungsverfahrens, wie der physikalischen oder chemischen Gasphasenabscheidung, aufgebracht. Dabei wird die behandelte Oberfläche mit einer dünnen Metallschicht, beispielsweise aus Aluminium, Kupfer, Titan, Gold, Silber, oder einer dünnen Oxidschicht, beispielsweise Aluminiumoxid (AlOx), Siliziumoxid (SiOx), beschichtet. Die Beschichtung kann dabei auch mehrlagig aufgebracht werden, auch mit unterschiedlichen Beschichtungen in den verschiedenen Lagen. Die Dicke der Barrierebeschichtung 5 in Form einer metallischen oder keramischen Beschichtung liegt vorzugsweise zwischen 5 - 50nm, und kann damit für die Recycelfähigkeit ebenso vernachlässigt werden.

Es können als Barrierebeschichtung 5 auch ein Barrierepolymer in Kombination mit einer metallischen oder keramischen Beschichtung oder auch verschiedene metallische oder keramische Beschichtungen vorgesehen sein, insbesondere wenn besonders hohe Barrierewerte benötigt werden. Vorteilhaft ist insbesondere eine Kombination aus einer metallischen oder keramischen Beschichtung mit einem Barrierelack, der die metallische oder keramische Beschichtung vorzugsweise abdeckt und damit zusätzlich die metallische oder keramische Beschichtung vor mechanischer Beschädigung schützt.

Zwischen der zentralen Filmschicht 2 und zumindest einer der beiden äußeren Filmschichten 3 ist im erfindungsgemäßen Polyethylenfilm 1 eine Polypropylenschicht 4 angeordnet, wie in den Figuren dargestellt ist. Die Dicke der Polypropylenschicht 4 im Polyethylenfilm 1 ist vorzugsweise zwischen 1 und 25 µm, um die Recycelfähigkeit des Polyethylenfilms 1 nicht zu beeinträchtigen. Durch die Polypropylenschicht 4 kann ein besonderes Peelverhalten erzielt werden, wie nachfolgend im Detail ausgeführt wird. "Zwischen angeordnet" bedeutet hierbei, dass die Polypropylenschicht 4 direkt an der äußeren Filmschicht 3 und der zentralen Filmschicht 2 anliegt.

Die Dicken der zentralen Filmschicht 2, der beiden äußeren Filmschichten 3 und der Polypropylenschicht 4, und gegebenenfalls der weiteren Schichten, sind natürlich so gewählt, dass die Gesamtdicke des Polyethylenfilms 1 zwischen 4 bis 50µm liegt.

Wenn am Polyethylenfilm 1 neben der Polypropylenschicht 4 auch eine Barrierebeschichtung 5 vorgesehen ist, dann sind die Polypropylenschicht 4 und die Barrierebeschichtung 5 vorzugsweise an unterschiedlichen Seiten des Polyethylenfilms 1, also an unterschiedlichen Seiten der zentralen Filmschicht 2, vorgesehen (wie in Fig.2).

Der Polyethylenfilm 1 wird vorzugsweise durch Extrusion oder Coextrusion hergestellt. Vorzugsweise kommt das bekannte Blasfolien- oder Flachfolienextrusionsverfahren zum Einsatz. Dabei werden die zentrale Filmschicht 2, die beiden äußeren Filmschichten 3 und die Polypropylenschicht 4 extrudiert oder coextrudiert. Danach kann der extrudierte oder coextrudierte Film unidirektional oder bidirektional gereckt werden. Im Falle einer unilateralen Reckung wird vorzugsweise in Maschinenrichtung (die Längs- oder Extrusionsrichtung) gereckt. Der Reckgrad beträgt dabei vorzugsweise 1:4 bis 1:10, bevorzugt 1:5, in Maschinenrichtung und ebenso quer dazu (falls bidirektional gereckt wird). Das Recken kann dabei in-line (also unmittelbar nach der Herstellung des Polyethylenfilms 1) oder off-line (also zu einem späteren Zeitpunkt nach der Herstellung) erfolgen. Ein unidirektionales Recken kann wesentlich einfacher und kostengünstiger durchgeführt werden, als ein bidirektionales Recken, wodurch die Kosten für die Herstellung gesenkt werden können.

Hier ist anzumerken, dass bei der Blasfolienextrusion und Flachfolienextrusion der Extrusionsspalt (bei der Blasfolie 1,5 bis 2,5 mm) bzw. der Spalt der Extrusionsdüse deutlich größer ist, als die Enddicke der extrudierten Folie (typisch zwischen 10 bis 200 µm). Hierzu wird die extrudierte Schmelze bei Temperaturen deutlich über dem Schmelzpunkt des extrudierten Polymers gedehnt, wodurch es die endgültige Dicke erhält. Bei der Blasfolienextrusion wird die Schmelze z.B. typischerweise in Querrichtung um ca. den Faktor 2 bis 3 (das sogenannte Aufblasverhältnis) und in Längsrichtung um den Faktor 1:10 bis 1:100 (das sogenannte Abzugsverhältnis) gedehnt. Dieses Dehnen beim Extrudieren kann aber in der Wirkung nicht mit dem Recken einer Kunststofffolie verglichen werden, da das Recken üblicherweise bei Temperaturen knapp unterhalb des Schmelzpunktes des Polymers erfolgt, um die ungeordneten Polymere und die teilkristallinen Bereiche durch das Recken in Reckrichtung bleibend auszurichten.

Falls eine Barrierebeschichtung 5 in Form eines Barrierepolymers verwendet wird, dann wird das Barrierepolymer vorzugsweise mit den anderen Schichten des Polyethylenfilms 1 als Polymerfilm extrudiert oder coextrudiert oder als Barrierelack nach der Extrusion oder Coextrusion der anderen Schichten in flüssiger Form aufgetragen. Der Barrierelack wird danach zur Ausbildung der Barrierebeschichtung 5 ausgehärtet, wobei sich auch ein allfällig vorhandenes Lösungsmittel des Barrierelackes verflüchtigt. Dabei können bedarfsweise auch Haftvermittlerschichten zwischen verschiedenen Schichten vorgesehen sein.

Durch das Recken kann auch die Transparenz des Polyethylenfilms 1 erhöht werden. Zusätzlich werden durch das Recken die Barrierewerte eines Barrierepolymers im Vergleich zum ungereckten gleichartigen Barrierepolymer ca. um das Drei- bis Vierfache erhöht, wodurch dünnere Barrierepolymere bei gleicher Barrierewirkung zum Einsatz kommen können. Dadurch können auch die Kosten Polyethylenfilms 1 deutlich gesenkt werden und die Recycelfreundlichkeit erhöht werden.

Wenn eine metallische oder keramische Barrierebeschichtung 5 vorgesehen ist, wird diese erst nach einem möglichen Recken aufgebracht.

Das Polyethylen-Copolymer oder Polyethylen-Terpolymer, oder eine Mischung davon, der äußeren Filmschichten 3 kann als Siegelschicht verwendet werden. Nachdem an beiden Seiten eine äußere Filmschicht 3 vorgesehen ist, kann der Polyethylenfilm 1 sehr flexibel zu einer Verpackung weiterverarbeitet werden, beispielsweise durch Falten und Siegeln.

Der Polyethylenfilm 1 kann aber auch zu einem Polyethylenlaminat 10, wie in Fig.3 dargestellt, weiterverarbeitet werden. Hierzu können zwei oder mehr Polyethylenfilme 1', 1" (die nicht gleich sein müssen) durch jeweils eine Verbindungsschicht 6 miteinander zum Polyethylenlaminat 10 verbunden werden. Im Polyethylenlaminat 10 ist zumindest einer der verwendeten Polyethylenfilme 1' erfindungsgemäß mit einer oben beschriebenen Polypropylenschicht 4 ausgestattet. Ein weiterer Polyethylenfilm 1" kann auch ohne Polypropylenschicht 4 ausgeführt sein, wobei für diesen weiteren Polyethylenfilm 1" bis auf die Polypropylenschicht 4 die obigen Ausführungen analog gelten.

Die Verbindung der Polyethylenfilme 1', 1" durch die Verbindungsschicht 6 erfolgt beispielsweise durch Klebekaschierung mit einem geeigneten Kaschierkleber, beispielsweise auf Basis von Polyurethanklebern. Andere geeignete Kaschierkleber sind Polymere mit erhöhter Polarität, beispielsweise auf Basis von hinsichtlich der Recyceleigenschaften zu Polyethylen kompatiblen Polymeren, wie beispielsweise mit Maleinsäureanhydrid modifizierte Polyolefine (wie PE oder PP), Ethylen-Vinylacetat-Copolymere (EVA), Ethylen/Acrylsäure-Copolymere (EAA), Ethylen-Butylacrylat-Copolymere (EBA), oder ähnliche Polyolefincopolymeren. Der Kaschierkleber bildet nach dem Aushärten die Verbindungsschicht 6 aus. Die Dicke der Verbindungsschicht 6 beträgt vorzugsweise 1 bis 5 µm und beeinträchtigt damit die Recyclingfähigkeit nicht.

Wenn eine Außenseite eines Polyethylenfilms 1', 1" mit einer Barrierebeschichtung 5 versehen ist, dann wird die Barrierebeschichtung 5 im Polyethylenlaminat 10 vorzugsweise innenliegend, also dem jeweils anderen Polyethylenfilm 1', 1" zugewandt, angeordnet (wie in Fig.3). Damit kann erreicht werden, dass die Barrierebeschichtung 5 geschützt ist und, dass am Polyethylenlaminat 10 beide Außenseiten durch eine äußere Filmschicht 3 aus einem Polyethylen-Copolymer oder Polyethylen-Terpolymer gebildet wird. Das Polyethylenlaminat 10 bildet demnach an beiden Seiten eine Siegelschicht aus und kann daher sehr flexibel weiterverarbeitet werden. Insbesondere ermöglicht das die Herstellung einer Verpackung mit Überlappungsnaht oder Umlegenaht. Durch das Kaschieren von zwei Polyethylenfilmen 1, 1' kann auch eine ausreichend hohe Steifigkeit des Polyethylenlaminats 10 erzielt werden, was für viele Verpackungsanwendungen wichtig ist.

Durch die Barrierebeschichtung 5 werden die Barrierewerte des Polyethylenlaminats 10, aber auch eines Polyethylenfilms 1, 1', deutlich verbessert. Angestrebt werden für Verpackungsanwendungen Barrierewerte von WVTR <5 g/m²/Tag und OTR <20 cm³/m²/Tag.

Die Polyethylenfilme 1', 1" mit der Polypropylenschicht 4 werden vorzugsweise so im Polyethylenlaminat 10 angeordnet, dass die Polypropylenschicht 4 jeweils der Außenseite des Polyethylenlaminats 10 zugewandt ist, dass die Polypropylenschicht also näher an der Außenseite des Polyethylenlaminats 10 als am anderen Polyethylenfilm liegt (wie in Fig.3).

Polypropylen ist mit dem Polyethylen-Copolymer oder Polyethylen-Terpolymer nicht siegelbar, d.h., dass sich das Polypropylen beim Siegeln nicht mit dem Polyethylen-Copolymer oder Polyethylen-Terpolymer verbindet. Das Polypropylen bildet damit im Polyethylenfilm 1 oder im Polyethylenlaminat 10 eine Art "Sollbruchstelle" aus, an der eine Verpackung an einer Siegelstelle einfach geöffnet werden kann. Damit erreicht man das oftmals erwünschte sogenannte Risspeel (Burst Peel) Verhalten.

Ein Polyethylenfilm 1, 1', 1" kann auch bedruckt werden, insbesondere auch an einer im Polyethylenlaminat 10 innenliegenden äußeren Filmschicht 3. Aufgrund der Transparenz des Polyethylenfilms 1, 1', 1" ist eine solche Bedruckung von außen sichtbar. Auch eine metallische oder keramische Beschichtung kann zur optischen Gestaltung genutzt werden.

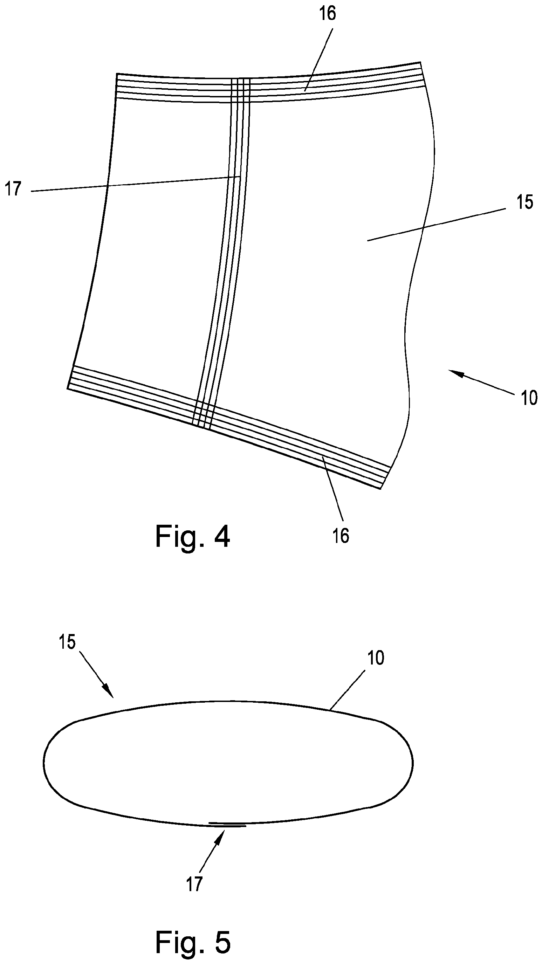

Das erfindungsgemäße Polyethylenlaminat 10 oder der erfindungsgemäße Polyethylenfilm 1 wird üblicherweise zur Herstellung einer Verpackung, beispielsweise für Lebensmittel, verwendet. Dazu kann das Polyethylenlaminat 10 oder der Polyethylenfilm 1 zugeschnitten und zur Verpackung 15 geformt werden, beispielsweise durch Falten und Siegeln, wie in Fig.4 am Beispiel eines Beutels mit einer Längssiegelung 17 und zwei Quersiegelungen 16 dargestellt. Das Polyethylenlaminat 10 oder der Polyethylenfilm 1 kann dazu auch direkt in bekannten kontinuierlichen Verpackungsmaschinen, z.B. sogenannte Form-Füllmaschinen oder Schlauchbeutelmaschinen, verarbeitet werden. Zum Siegeln wird das gefaltete Polyethylenlaminat 10 oder der gefaltete Polyethylenfilm 1 bekanntermaßen an der Siegelstelle zwischen einer oder (je nach Prozess/Maschine) zwei temperierten Siegelbacken zusammengepresst. Aufgrund des Aufbaus des Polyethylenlaminats 10 oder Polyethylenfilms 1 mit zwei außen liegenden Siegelschichten (äußere Filmschichten 3 aus Polyethylen-Terpolymer), können damit auch Überlappungsnähte realisiert werden, wie in Fig.5 dargestellt. Dabei wird, beispielsweise an der Längssiegelung 17, eine Innenseite des Polyethylenlaminats 10 oder Polyethylenfilms gegen eine Außenseite gesiegelt. Es ist aber auch eine Umlegenaht (Innenseite gegen Innenseite wie an den Quersiegelungen 16) möglich.

Nachfolgend wird beispielhaft eine konkrete Ausführung eines erfindungsgemäßen Polyethylenfilms 1, 1', 1" und eines Polyethylenlaminats 10 beschrieben.

In dieser Ausführung besteht der durch Coextrusion mittels Blasfolienextrusionsverfahren hergestellte erste Polyethylenfilm 1' aus einer zentralen Filmschicht 2 mit einem Anteil an Polyethylen hoher Dichte (HDPE) von 100 Vol% und einer Dicke von 11 µm. Weiterhin besteht der Polyethylenfilm 1' aus zwei außenliegenden durch Coextrusion aufgebrachten äußeren Filmschichten 3, jeweils bestehend aus einem Polyethylen-Copolymer mit 1-Octen als Comonomer und mit LLDPE als resultierendem Polyethylen im Polyethylen-Copolymer. Jede der beiden äußeren Filmschichten 3 hat eine Dicke von 3 µm. Zwischen der zentralen Filmschicht 2 und einer der äußeren Filmschichten 3 wird eine Polypropylenschicht 4 mit einer Dicke von 3 µm coextrudiert. Die Gesamtdicke des Polyethylenfilms 1 beträgt 20 µm.

Auf der der Polypropylenschicht 4 gegenüberliegenden Seite des Polyethylenfilms 1' ist eine mittels Tiefdruckverfahren aufgebrachte Druckschicht vorgesehen, welche aufgrund der Transparenz des Polyethlenfilms 1' im Polyethylenlaminat 10 von außen sichtbar ist.

Durch Coextrusion wird ein zweiter Polyethylenfilm 1" hergestellt, welcher hinsichtlich der zentralen Filmschicht 2, der beiden äußeren Filmschichten 3 und der Polypropylenschicht 4 identisch zum ersten Polyethylenfilm 1' aufgebaut ist. An diesem zweiten Polyethylenfilm 1" ist allerdings keine Bedruckung vorgesehen. Nach der Coextrusion wird auf der äußeren Filmschicht 3 des zweiten Polyethylenfilms 1", die bezüglich der zentralen Filmschicht 2 der Polypropylenschicht 4 gegenüberliegend angeordnet ist, außenliegend eine metallische Barrierebeschichtung 5 in Form einer Metallisierung mit Aluminium aufgebracht.

Die beiden Polyethylenfilme 1', 1" werden mittels Kaschierung unter Verwendung eines PUbasierten Kaschierklebers mit einem Flächengewicht von 2 g/m² miteinander zu einem Polyethylenlaminat 10 verbunden. Der erste Polyethylenfilm 1' mit der Bedruckung ist dabei im Polyethylenlaminat 10 so angeordnet, dass die Bedruckung im Polyethylenlaminat 10 näher am zweiten Polyethylenfilm 1" angeordnet ist als die Polypropylenschicht 4 des ersten Polyethylenfilms 1'. Die Bedruckung ist damit im Polyethylenlaminat 10 innenliegend angeordnet. Der zweite Polyethylenfilm 1" mit der Metallisierung ist dabei so im Polyethylenlaminat 10 angeordnet, dass die Metallisierung im Polyethylenlaminat 10 näher am ersten Polyethylenfilm 1' angeordnet ist als die Polypropylenschicht 4 des zweiten Polyethylenfilms 1". Die Metallisierung ist damit im Polyethylenlaminat 10 innenliegend angeordnet.

Das derart hergestellte Polyethylenlaminat 10 wird anschließend zu einer Verpackung in Form eines Beutels, beispielsweise wie in Fig.4 dargestellt, verarbeitet. Das Polyethylenlaminat 10 wird dabei so verarbeitet, dass der erste Polyethylenfilm 1' mit der Bedruckung an der Außenseite der Verpackung und der zweite Polyethylenfilm 1" mit der Metallisierung an der Innenseite der Verpackung angeordnet ist. Die Herstellung der Verpackung erfolgt durch Heißsiegeln, beispielsweise auf einer Form-Füllmaschine.

## Patentansprüche

1. Polyethylenfilm mit einer zentralen Filmschicht (2) bestehend aus 30 Vol% bis 100 Vol% Polyethylen hoher Dichte, die an beiden Seiten jeweils von einer äußeren Filmschicht (3) bestehend aus zumindest einem Polyethylen-Copolymer oder zumindest einem Polyethylen-Terpolymer oder bestehend aus zumindest einem Polyethylen-Copolymer und zumindest einem Polyethylen-Terpolymer umgeben ist, wobei zwischen der zentralen Filmschicht (2) und zumindest einer der äußeren Filmschichten (3) eine Polypropylenschicht (4) angeordnet ist.

2. Polyethylenfilm nach Anspruch 1, **dadurch gekennzeichnet, dass** der Polyethylenfilm (1) zwischen 4 bis 50 µm dick ist, wobei die zentrale Filmschicht (2) zwischen 1 bis 47 µm dick ist, die äußeren Filmschichten (3) zwischen 1 bis 25µm dick sind und die Polypropylenschicht (4) zwischen 1 und 25 µm dick ist.

3. Polyethylenfilm nach Anspruch 1 oder 2, **dadurch gekennzeichnet, dass** an zumindest einer der äußeren Filmschichten (3) an der Außenseite eine Barrierebeschichtung (5) vorgesehen ist.

4. Polyethylenfilm nach Anspruch 3, **dadurch gekennzeichnet, dass** die Barrierebeschichtung (5) als ein- oder mehrschichtige metallische oder keramische Beschichtung ausgeführt ist.

5. Polyethylenfilm nach Anspruch 3, **dadurch gekennzeichnet, dass** als Barrierebeschichtung (5) ein Barrierepolymer vorgesehen ist, vorzugsweise Polyvinylalkohol (PVOH) sowie Copolymere daraus, Polyamid (PA), Polyvinylidenchlorid (PVDC), Ethylen-Vinylalkohol-Copolymer (EVOH), ein Polyurethan (PU), Ethylencopolymere, Polymere basierend auf Polyacrylsäure oder ein Acrylat.

6. Polyethylenfilm nach Anspruch 4 und 5, **dadurch gekennzeichnet, dass** als Barrierebeschichtung (5) eine Kombination aus einer ein- oder mehrschichtigen metallischen oder keramischen Beschichtung und einem Barrierepolymer vorgesehen ist.

7. Polyethylenlaminat bestehend aus einem ersten Polyethylenfilm (1') nach einem der Ansprüche 1 bis 6, der mit einem zweiten Polyethylenfilm (1") nach einem der Ansprüche 1 bis 6 verbunden ist.

8. Polyethylenlaminat bestehend aus einem ersten Polyethylenfilm (1') nach einem der Ansprüche 1 bis 6, der mit einem zweiten Polyethylenfilm (1") verbunden ist, wobei der zweite Polyethylenfilm (1") mit einer zentralen Filmschicht (2) bestehend aus 30 Vol% bis 100 Vol% Polyethylen hoher Dichte, die an beiden Seiten jeweils von einer äußeren Filmschicht (3) bestehend aus zumindest einem Polyethylen-Copolymer oder zumindest einem Polyethylen-Terpolymer, oder aus zumindest einem Polyethylen-Copolymer und zumindest einem Polyethylen-Terpolymer umgeben ist, ausgeführt ist.

9. Polyethylenlaminat nach Anspruch 7 oder 8, **dadurch gekennzeichnet, dass** die Barrierebeschichtung (5) im Polyethylenlaminat (10) innenliegend angeordnet ist.

10. Polyethylenlaminat nach Anspruch 7 oder 9, **dadurch gekennzeichnet, dass** die Polypropylenschicht (4) einer Außenseite des Polyethylenlaminats (10) zugewandt angeordnet ist.

11. Verfahren zur Herstellung eines Polyethylenfilms (1, 1', 1"), bei dem eine zentrale Filmschicht (2) bestehend aus 30 Vol% bis 100 Vol% Polyethylen hoher Dichte durch ein Extrusionsverfahren an beiden Seiten jeweils mit einer äußeren Filmschicht (3) bestehend aus zumindest einem Polyethylen-Copolymer oder zumindest einem Polyethylen-Terpolymer, oder bestehend aus zumindest einem Polyethylen-Copolymer und zumindest einem Polyethylen-Terpolymer umgeben wird, wobei zwischen der zentralen Filmschicht (2) und zumindest einer der äußeren Filmschichten (3) eine Polypropylenschicht (4) extrudiert wird.

12. Verfahren nach Anspruch 11, **dadurch gekennzeichnet, dass** an zumindest einer der äußeren Filmschichten (3) an der Außenseite eine Barrierebeschichtung (5) aufgebracht wird.

13. Verfahren nach Anspruch 12, **dadurch gekennzeichnet, dass** als Barrierebeschichtung (5) eine ein- oder mehrschichtige metallische oder keramische Beschichtung aufgebracht wird.

14. Verfahren nach Anspruch 12, **dadurch gekennzeichnet, dass** als Barrierebeschichtung (5) ein Barrierepolymer, vorzugsweise Polyvinylalkohol (PVOH) sowie Copolymere daraus, Polyamid (PA), Polyvinylidenchlorid (PVDC), Ethylen-Vinylalkohol-Copolymer (EVOH), ein Polyurethan (PU), Ethylencopolymere, Polymere basierend auf Polyacrylsäure oder ein Acrylat, aufgebracht wird.

15. Verfahren nach Anspruch 14, **dadurch gekennzeichnet, dass** das Barrierepolymer als Polymerfilm oder als Barrierelack aufgebracht wird.

16. Verfahren zur Herstellung eines Polyethylenlaminat (10) bei dem ein erster Polyethylenfilm (1') nach einem der Ansprüche 1 bis 6 mit einem Kaschierkleber mit einem zweiten Polyethylenfilm (1") nach einem der Ansprüche 1 bis 6 verbunden wird.

17. Verfahren zur Herstellung eines Polyethylenlaminats (10) bei dem ein erster Polyethylenfilm (1') nach einem der Ansprüche 1 bis 6 mit einem Kaschierkleber mit einem zweiten Polyethylenfilm (1") verbunden wird, wobei der zweite Polyethylenfilm (1") mit einer zentralen Filmschicht (2) bestehend aus 30 Vol% bis 100 Vol% Polyethylen hoher Dichte, die an beiden Seiten jeweils von einer äußeren Filmschicht (3) bestehend aus zumindest einem Polyethylen-Copolymer oder zumindest einem Polyethylen-Terpolymer oder aus zumindest einem Polyethylen-Copolymer und zumindest einem Polyethylen-Terpolymer umgeben wird, ausgeführt wird.
